# EUROPEAN PATENT SPECIFICATION

(11) **EP 2 051 906 B1**
(45) Date of publication and mention of the grant of the patent: **19.09.2018**
(21) Application number: 07784931.3
(22) Date of filing: 08.08.2007
(51) Int. Cl.: B64C 23/06, B64C 3/58, B64C 7/02, B64C 9/24

(54) **AERODYNAMIC DEVICE FOR IMPROVEMENT OF SUSTENTATION COEFFICIENT**
AERODYNAMISCHE VORRICHTUNG ZUR VERBESSERUNG DES AUFTRIEBSKOEFFIZIENTEN
DISPOSITIF AÉRODYNAMIQUE PERMETTANT D'AMÉLIORER LE COEFFICIENT DE SUSTENTATION

(30) Priority: 08.08.2006 BR PI0603262
(43) Date of publication of application: 29.04.2009
(73) Proprietor: Embraer S.A., 12227-901 São José Dos Campos SP (BR)
(72) Inventor: DO AREAL SOUTO FERRARI, Marcello, 12243-060, Sao José Dos Campos, SP. (BR)
(74) Representative: Liesegang, Eva
(86) International application number: PCT/BR2007/000202
(87) International publication number: WO 2008/017134

(56) References cited:
- EP-A1- 1 145 954
- WO-A1-95/20521
- WO-A2-2005/099380
- GB-A- 2 318 558
- US-A- 3 285 542
- US-A- 4 598 885
- US-A- 4 702 441
- US-A- 4 739 957
- US-A- 5 056 741
- US-A- 5 249 762

## Description

The present invention refers to an aerodynamic device for performance improvement of an aircraft in low speeds.

### Background of the Invention.

In a typical mission, an aircraft can operate in several speeds, according to the phase of that mission. In the cruise phase, it is operated in high speeds. In a take-off situation, for instance, with ascent and holding (situation where the aircraft awaits permission for landing), it is operated in intermediate speeds. In the landing phase typically the aircraft operates in the lowest speed. It is desirable that an aircraft operates efficiently also in low speeds, because that allows the aircraft to land in safer conditions, besides being easier to ratify the aircraft to land in a larger number of runways (since it is able to land in low speeds, it will also be able to land in shortest runways).

As the aircraft diminishes the operation speed, however, an aerodynamic degradation can be verified in the wing that harms its capacity to produce sustentation. In the specific literature can be found aerodynamic devices whose function is to delay the emergence of that degradation and to allow the aircraft operate with safety at low speeds. Vortex generators fastened to the leading edge of the wing, aerodynamic fences and vortilons are examples of those devices.

The patent US 6,152,404 from 11/28/2000, entitled "Apparatus for influencing a wing root airflow in an aircraft", which treats of details of aerodynamic the slat when it is extended, so the fence cannot never be in another position. This same document US 6,152,404 even includes cogitations about small changes in the fence geometry, but it is always fastened to the slat.

US 4,598,885 describes an aircraft wing structure wherein, between the fuselage of the airplane and the wing there is a section of stringer, smaller than the width of the wing and connecting that wing to the fuselage. In order to avoid vortex turbulences, a fence is provided at the end of the wing facing the fuselage.

### Brief Description of the Drawings

The invention will be widely described based on the illustrations, where:
Figure 1 shows a perspective view, in details, of vortex generators fastened to an area near the leading edge of an aircraft wing, as a state of the art already known;
Figure 2 illustrates vortex generators fastened to the fuselage of an aircraft, on the canopy/cockpit area, also belonging to the state of the known art;
Figure 3 shows a perspective front view, in details, of the engine cowling of an aircraft, where a type of aerodynamic fence from the state of art is installed to maintain quality of the wing air flow;
Figure 4 is a top view of an exemplary aircraft, having an indication of detail areas H; Figure 5a shows a detailed top view of an aerodynamic device of fence type, fastened to the slat, closed, corresponding to the solutions found in the state of art. Figure 5a is a zoom view of the area H indicated in figure 4;
Figure 5b illustrates a detailed top view of the aerodynamic device of fence type, from the state of art, where the fence is fastened to the slat which is in the extended position now. Figure 5b is a zoom view of the area H indicated in figure 4;

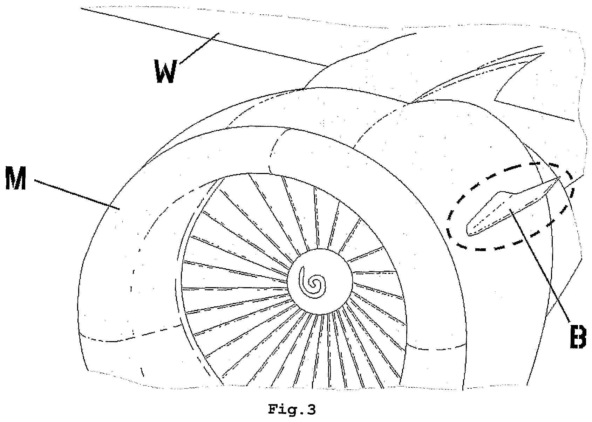

Figure 3 shows a perspective front view, in details, of the engine cowling of an aircraft, where a type of aerodynamic fence from the state of art is installed to maintain quality of the wing air flow;

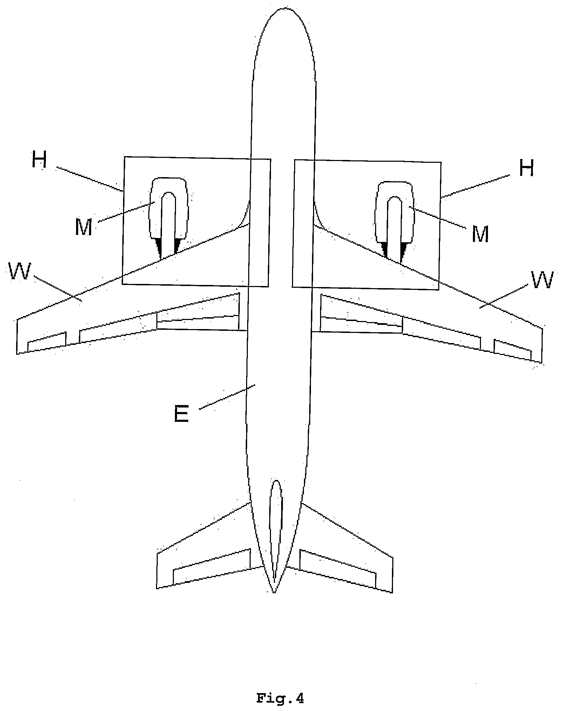

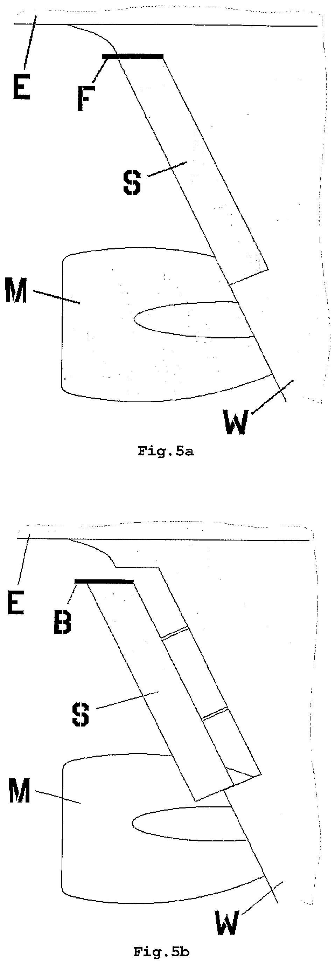

Figure 4 is a top view of an exemplary aircraft, having an indication of detail areas H; Figure 5a shows a detailed top view of an aerodynamic device of fence type, fastened to the slat, closed, corresponding to the solutions found in the state of art. Figure 5a is a zoom view of the area H indicated in figure 4;
Figure 5b illustrates a detailed top view of the aerodynamic device of fence type, from the state of art, where the fence is fastened to the slat which is in the extended position now. Figure 5b is a zoom view of the area H indicated in figure 4;

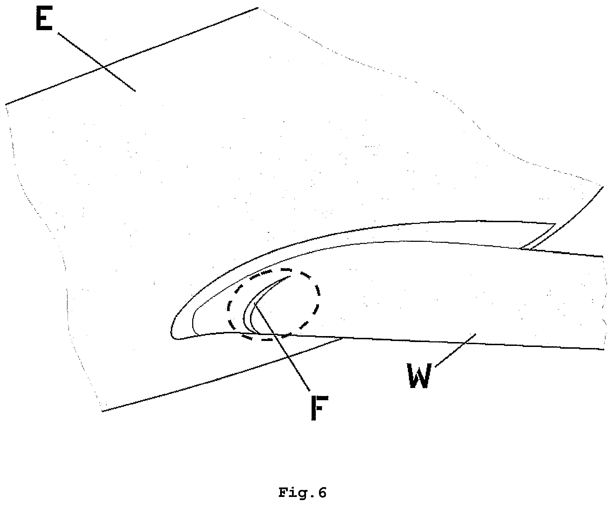

Figure 6 represents a perspective view, in details, showing the position of the fence of the present invention, close to the fuselage, with the slat closed (recoiled position), on the leading edge of an aircraft wing;

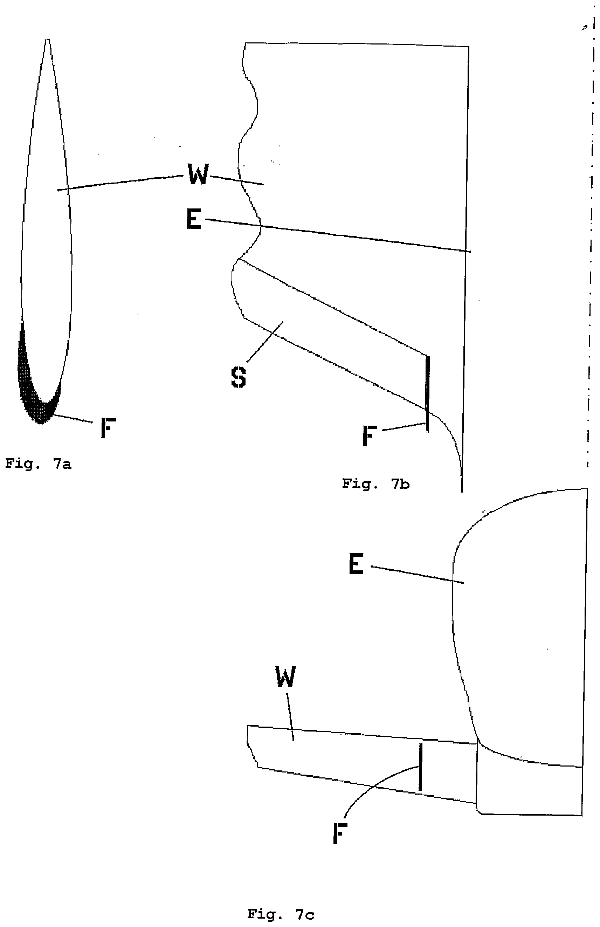

Figure 7 is a three view drawing, in details, showing the positioning of the fence of the present invention, with the slat in recoiled position (closed), on the exemplary aircraft;

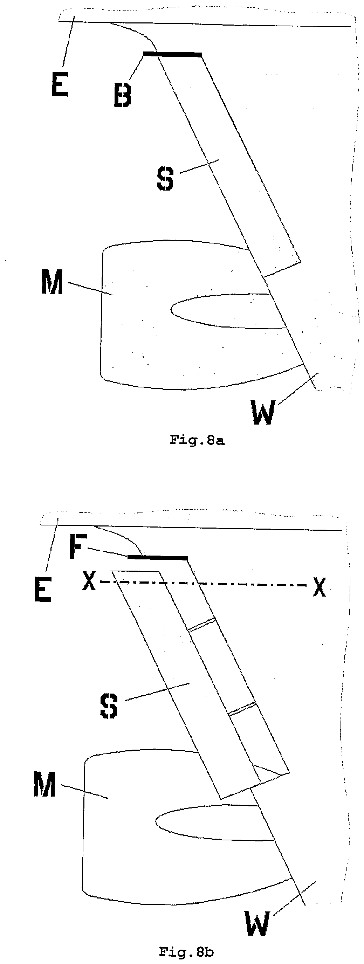

Figure 8a shows a top view, in details, of the aerodynamic device of fence type belonging to the invention, which is not fastened to the slat but to the leading edge of the wing; in this view, the slat is in the closed position; Figure 8b is a detailed top view of the aerodynamic device of the fence type of the present invention, having a trace-dot line indicating a section area X-X; it should be noticed that the slat is, now, in the extended position;

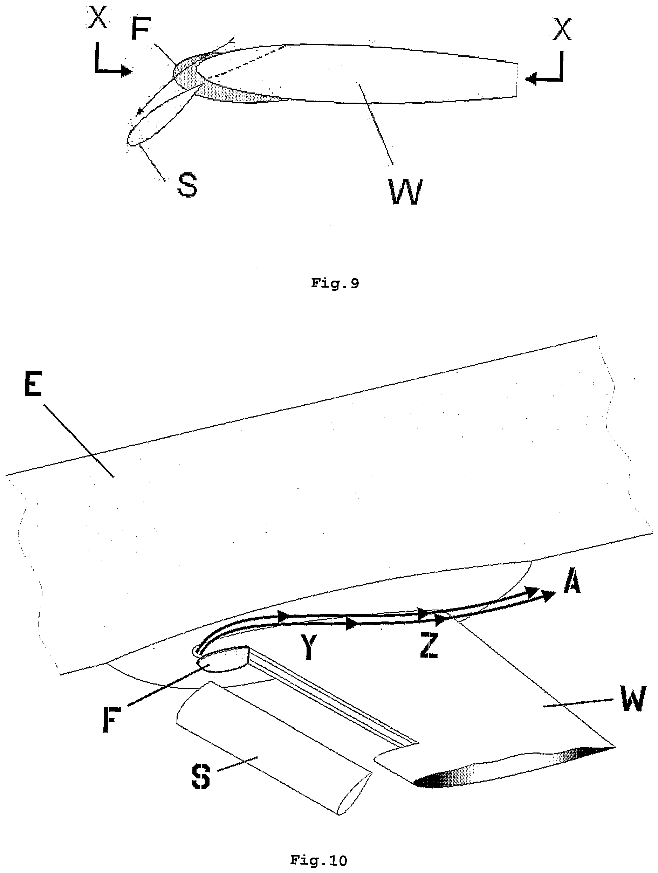

Figure 9 shows a side view of the wing, according to the section area X-X in figure 10; Figure 10 illustrates a perspective view, in details, of an aircraft equipped with the aerodynamic device of fence type of the present invention installed on the leading edge of the wing, where the vortex formed in the said fence is graphically represented.

### Detailed Description of the Figures and Invention.

The new aerodynamic device of the invention will be referred here as an aerodynamic fence, and its function is to allow the aircraft operate more safely in low speed conditions, such as upon landing. The fence generates an aerodynamic vortex that passes over the wing, providing desirable characteristics to the air flow on this area. As the operational attack angle of an aircraft increases in flight, measurements of pressure distribution reveals that adverse pressure gradients on the extra- dorsum of the wing increase upon recovery of pressure to the wing trailing edge, making the air flow on this area prone to suffer aerodynamic loss. When the aerodynamic loss begins, it is verified that producing sustentation becomes difficult, what is undesirable for an aircraft.

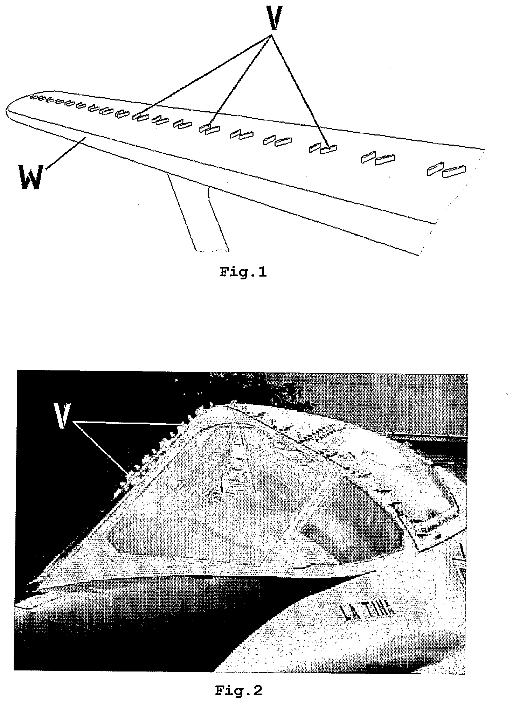

Vortex generators (V) fastened along the leading edge of the wing (W), according to figure 1, belong to the state of known art. Vortex generators (V) disposed over an aircraft fuselage are also known, such as on the canopy/cockpit area (figure 2), having an effect of avoiding aerodynamic loss on the canopy/cockpit area of the aircraft, but their primordial function is not to help the aircraft sustentation.

Figure 3 is shows a type of aerodynamic fence (B) from state of art, which is positioned close to the engine (turbine) cowling (M) of an aircraft, to maintain a good air flow quality on the wing (W). In figure 6, the position of the aerodynamic fence ((F), surrounded by a dotted line) of the present invention, on the leading edge of the wing (W), can be observed; the fence (F) is close to fuselage (E) and the slat on the wing leading edge is closed (recoiled position)

Figure 5a is a top view of an aerodynamic device (B) of fence type, corresponding to a previously known solution; the fence (B) is fastened to the slat (S) which, in this figure, is in recoiled position (closed). In figure 5b the same fence (B) fastened to the slat (S) can be observed, however the slat is extended ("open" position) now; therefore, according to the already known state of art, the fence (B) accompanies the movement of the slat (S) . This is the basic difference among the fence (B), already known, and the new fence adopted by the present invention.

Viewing the figure 6, there is no visual difference between the proposal of the present invention and the proposal of the state of art, having the same function, showed in the figures 5a/5b, if both slats are in recoiled position (closed).

For better visualization clarity, figure 4 shows a top view of an exemplary aircraft with indications of detail areas (H), each surrounded by a square in full line and showing the location area of the fence (F - not shown) of the present invention, where installation of one or more fences (F) is symmetrical for both wings (W) of the aircraft. It can be seen the proximity of the fence (F) to the fuselage (E) and to the cowling (M), also as it can be seen in figures 7a, 7b and 7c which exhibit three view drawings of the position of the fence (F) on the aircraft. Figure 7a is a side view of the wing (W), figure 7b is a top view of the aircraft wing, and figure 7c is a frontal view of the aircraft.

Figure 8 presents a top view of the aerodynamic device of fence type (F) belonging to the invention, where said fence (F) is not fastened to the slat (S) but to the leading edge of the wing (W) ; in figure 8a, the slat (S) is in the closed position. Figure 8b shows the same fence (F), however the slat (S) is extended ("open" position) now. It can be observed a trace-dot line indicating a section area X-X which is also shown in figure 9.

In figure 9, corresponding to a side view of the wing (W), the section area X-X allows visualization of the extended ("open") slat (S), evidencing the fact that the fence (F) is fastened to the leading edge of the wing (W) . Also it can be seen the smooth rounded, laminated shape of said fence.

The aerodynamic fence (F) of the present invention causes an aerodynamic vortex acting on extra-dorsum of the wing (upper area of the wing), which allows the existence of a stronger adverse gradient of pressure without occurrence of aerodynamic loss and having beneficial effect on the extra-dorsum of the wing.

When aerodynamic air flow occurs, it is noticed that a threshold layer is formed along the whole surface of the airplane. The proximity of the fuselage to the wing causes a confluence of two threshold layers, a layer on extra-dorsum of the wing and another layer on the wing-fuselage fairing, making the resulting air flow threshold layer thicker and prone to suffer aerodynamic loss. The fence of the present invention is an efficient solution against problems due the referred confluence in area close to the intersection wing-fuselage.

Figure 10 is a perspective view of an aircraft equipped with the aerodynamic device (fence (F)) of the invention on the leading edge of the wing (W), where the lines (A) are representing graphically the vortex formed on the wing (W) on said fence. The vortex allows that air portions of undisturbed air flow (area Y over the wing, closer to the leading edge) be brought close to the surface of the wing (area Z over the wing, closer to the trailing edge) . This alters favorably the profile of threshold layer in the area (Z), making it more resistant to the aerodynamic loss. Thus, the aircraft resists to larger attack angles without suffering "stall" and providing, for example, best landing characteristic. It is important to notice that the effectiveness of the aerodynamic device is verified only when the slat (S) is extended ("open" position), according to figure 10. The fence (F) with this element (slat (S)) closed (recoiled) doesn't have function for the instance of the present invention.

The fence (F) of the present invention was developed and it suffered several assays in wind tunnel to prove its operation and high efficiency, significantly improving the aircraft performance at low speeds; particularly, there was a significant improving of the maximum sustentation coefficient compared to the designs using fences (B) known of the state of art. Further, wind tunnel assays were made with the same aircraft without fences, with the aircraft having the fence (B) in the already known position (figures 5a and 5b - fence fastened to the slat (S)), and with the aircraft having the fence (F) proposed by this invention (figs. 8a and 8b). Using the fence (F) of the invention, the percentile improvement of the sustentation coefficient compared to the already known solutions (fence B) is equivalent to the improvement of the already known solutions if compared to the configuration without fences.

As can be seen, the fence (F) of the present invention is not fastened to a movable part; to fasten it to a movable part would require a movable mechanical system having a strong structure to support the apparatus itself and the eventual aerodynamic loads. This would make the system unnecessarily heavier and complex. The fixation on the body (wing) of the aircraft is much simpler and it demands much less structural reinforcement.

The fixed (non-movable) portion of the fuselage, where the fence is fastened (F), is more rigid structurally, thus the probability of occurrence of structural damage due to phenomena of interaction flow/structure, such as flutter or divergence, is smaller.

If the fence (F) requires a heating system due problems of ice formation, it will be simpler to implement this system if the fence is fastened to the aircraft, otherwise it would be necessary, for example, to bleed warm fluid from the slat (S) to the fence area. Also, like the fence (F) is solidary to the fixed (non-movable) portion of the wing (W), the maintenance is simpler.

Subjects involving retrofit (determination to incorporate modifications and improvements to airplanes already previously manufactured and dispatched) are easy to solve, therefore the installation is eventually easier due the fact that the fence (F) is fastened to a more rigid area of the wing (W).

An example of a favorite materialization of the invention was described, thus it should be understood that the scope of the present invention embraces other possible variations and it is only limited by the contents of the claims including its possible equivalents.

## Claims

1. An aircraft wing including a slat (S) at a leading edge of the wing (W) and a non-movable fence (F) fastened to a non-movable structurally rigid portion of the wing on the leading edge of the wing (W), adjacent at a side of the slat (S), and extending from a surface of the wing in a closed position of the slat, wherein the fence (F) has a smooth rounded, laminated shape and causes an aerodynamic vortex acting on the extra-dorsum of the wing (W).

2. The aircraft wing of claim 1, wherein the fence (F) is positioned on the wing (W) close to the fuselage of the aircraft.

3. The aircraft wing of one of the preceding claims, wherein the slat (S) is movable between a recoiled position and an extended position wherein, in the extended position, the slat (S) extends from a slat receiving space wherein the fence (F) is mounted to a side wall of the slat receiving space.

## Patentansprüche

1. Flugzeug-Flügel umfassend eine Lamelle (S) an einer führenden Kante des Flügels (W) und einen nicht beweglichen Zaun (F), der an einem nicht beweglichen strukturell starren Teil des Flügels an der führenden Kante des Flügels (W) neben einer Seite der Lamelle (S) angebracht ist und sich in einer geschlossenen Position der Lamelle von einer Oberfläche des Flügels erstreckt, wobei der Zaun (F) eine glatte gerundete laminierte Form hat und einen aerodynamischen Wirbel bewirkt, der außerhalb des Rückens des Flügels W wirkt.

2. Flugzeug-Flügel nach Anspruch 1, wobei der Zaun (F) auf dem Flügel (W) in der Nähe des Flugzeugrumpfes angeordnet ist.

3. Flugzeug-Flügel nach einem der vorangehenden Ansprüche, wobei die Lamelle (S) beweglich zwischen einer zurückgezogenen Position und einer ausgestreckten Position ist, wobei die Lamelle (S) in der ausgestreckten Position sich von einem Raum, der die Lamelle aufnimmt, erstreckt, wobei der Zaun (F) auf einer Seitenwand des Raums, der die Lamelle aufnimmt, angebracht ist.

## Revendications

1. Aile d'avion comprenant un bec (S) au niveau d'un bord d'attaque de l'aile (W) et une cloison de décrochage immobile (F) fixée à une partie structurellement rigide immobile de l'aile sur le bord d'attaque de l'aile (W), adjacente à un côté du bec (S), et s'étendant à partir d'une surface de l'aile dans une position fermée du bec,
dans laquelle la cloison de décrochage (F) a une forme stratifiée arrondie lisse et provoque un tourbillon aérodynamique agissant sur l'extrados de l'aile (W).

2. Aile d'avion selon la revendication 1, dans laquelle la cloison de décrochage (F) est positionnée sur l'aile (W) à proximité du fuselage de l'avion.

3. Aile d'avion selon l'une des revendications précédentes, dans laquelle le bec (S) est mobile entre une position reculée et une position étendue dans laquelle, dans la position étendue, le bec (S) s'étend à partir d'un espace de réception de bec, dans laquelle la cloison de décrochage (F) est montée sur une paroi latérale de l'espace de réception de bec.
